**Europäisches Patentamt**

**European Patent Office**

**Office européen des brevets**

(19)

(11) Numéro de publication: **0 057 802**
**B1**

(12)

# FASCICULE DE BREVET EUROPEEN

(45) Date de publication du fascicule du brevet:
06.03.85

(51) Int. Cl.⁴: **G 01 V 3/30**

(21) Numéro de dépôt: **81402103.6**

(22) Date de dépôt: **31.12.81**

(54) Mesure de phase et d'amplitude pour un système de diagraphie des propriétés diélectriques.

(30) Priorité: **31.12.80 FR 8027869**

(43) Date de publication de la demande:
**18.08.82 Bulletin 82/33**

(45) Mention de la délivrance du brevet:
**06.03.85 Bulletin 85/10**

(84) Etats contractants désignés:
**DE FR GB IT NL**

(56) Documents cités:
**FR - A - 2 241 795**
**FR - A - 2 404 235**
**US - A - 4 107 598**
**US - A - 4 130 793**

(73) Titulaire: **SOCIETE DE PROSPECTION ELECTRIQUE SCHLUMBERGER, 42, rue Saint-Dominique, F-75340 Paris Cedex 07 (FR)**

(84) Etats contractants désignés: **FR IT**

(73) Titulaire: **Schlumberger Limited, 277 Park Avenue, New York, N.Y. 10172 (US)**

(84) Etats contractants désignés: **DE GB NL**

(72) Inventeur: **Thoraval, Yvon Sylvestre Marcel, 7, Square des Peupliers, F-92350 Le Plessis Robinson (FR)**

(74) Mandataire: **Hagel, Francis et al, Service Brevets ETUDES ET PRODUCTIONS SCHLUMBERGER B.P. 202, F-92142 Clamart Cedex (FR)**

BUNDESDRUCKEREI BERLIN

## Description

La présente invention concerne un dispositif et un procédé de diagraphie, et elle concerne plus particulièrement un dispositif et un procédé de diagraphie des propriétés diélectriques.

Dans l'art antérieur, par exemple US-A-4 185 238, on a décrit un système de diagraphie comportant un outil, comprenant un émetteur et des récepteurs, qui fournit une mesure des propriétés diélectriques de formations terrestres entrourant un sondage. Dans ce système, de l'énergie électromagnétique est produite en un premier endroit du sondage et l'atténuation relative de l'énergie électromagnétique est détectée en un second endroit du sondage. La détection se fait en utilisant un premier agencement différentiel de deux récepteurs. La phase relative de l'énergie électromagnétique est détectée en un troisième endroit du sondage par un second agencement différentiel de deux récepteurs, et des moyens sont prévus pour déterminer la constante diélectrique et/ou la conductivité des formations en fonction de l'atténuation relative et de la phase relative détectées.

Par suite des fortes variations de température pendant la diagraphie, on doit s'attendre à une dérive considérable avec le type de dispositifs de mesure de phase et d'amplitude existant actuellement. Les solutions proposées pour résoudre ce problème, comme décrit par exemple dans US-A-4 100 483, suggèrent de placer les circuits de mesure de phase en surface, loin des effets des températures régnant dans le sondage, plutôt que de les placer dans l'outil descendu dans le sondage. De cette manière les effets des variations de températures sont prétendument réduits aux dépens d'une complexité plus importante de la transmission des données. Cependant, une telle solution ne semble pas efficace pour résoudre les problèmes engendrés par les variations de température rencontrées dans un sondage étant donné que le support de transmission lui-même, c'est-à-dire un câble, est soumis à des variations de température très semblables. En outre, étant donné que le volume d'informations transmises à la surface est plus important, la réduction des effets adverses de ces variations de température devient plus difficile. Ainsi, la nécessité de traiter les signaux fournis par les récepteurs pour en extraire les informations utiles concernant les différences de phase et d'amplitude de façon efficace et utile, impose qu'un tel traitement se fasse dans le sondage, dans l'outil de diagraphie.

La présente invention représente un perfectionnement vis-à-vis des dispositifs mentionnés ci-dessus étant donné que le signal de sortie obtenu est moins fortement influencé par la température dans le sondage. Par conséquent, on obtient une meilleure résolution des mesures en utilisant la présente invention.

FR-A-2 404 235 (SCHLUMBERGER) dont la plus grande partie est équivalente au brevet américain N° 4 185 238 précédemment cité, décrit un premier mode de réalisation (figure 1 à 3) ayant une voie de mesure d'amplitude couplée à deux récepteurs $R_1$ $R_2$ et une voie de mesure de phase distincte couplée à deux autres récepteurs $R_3$ $R_4$. Ce brevet décrit aussi un deuxième mode de réalisation (figure 12) dans lequel on utilise un système de multiplexage pour coupler successivement un circuit de mesure à deux récepteurs ($R_3$ $R_4$). Ce circuit de mesure qui comporte une branche de mesure d'amplitude et une branche de mesure de phase a un tronc commun (212—216) d'amplification et de filtrage.

Le but de l'invention est de réduire de façon appréciable l'effet des variations de températures dans un sondage sur les mesures de phase et d'amplitude en utilisant des voies distinctes pour ces mesures respectives de phase et d'amplitude. Ce principe permet d'obtenir la précision importante exigée pour de telles mesures en dépit des effets défavorables de la température, étant donné que les exigences d'obtention de mesures très précises pour la phase et l'amplitude peuvent être satisfaites de façon indépendante. En outre, la grande précision souhaitée pour les mesures de phase et d'amplitude relatives, par exemple entre les sorties de récepteurs différents, est assurée en utilisant un seul circuit de mesure de phase et un seul circuit de mesure d'amplitude. En multiplexant dans le temps les signaux de sortie des récepteurs et en traitant toutes les mesures de phase par l'intermédiaire d'un circuit de mesure de phase, les effets défavorables des variations de températures sur les composants de ce circuit seront les mêmes pour toutes les mesures de phase et par conséquent la mesure de phase relative souhaitée ne sera pas affectée par ces effets défavorables des variations de température attribuables aux composants individuels. On remarquera naturellement que lorsque les composants utilisés diffèrent d'un circuit de mesure de phase à l'autre dans le cas où on utilise plus d'un circuit de mesure de phase, les effets défavorables des variations de température existent toujours dans la mesure de phase relative entre les signaux de sortie des différents circuits. De façon similaire, l'utilisation d'un circuit de mesure d'amplitude et le multiplexage dans le temps des signaux de sortie des récepteurs, les effets défavorables des variations de température sur les composants de ce circuit seront les mêmes pour toutes les mesures d'amplitude et par conséquent la mesure d'amplitude relative souhaitée ne sera pas affectée par les effets désavantageux des variations de température attribuables aux composants individuels.

Un autre avantage de l'invention est d'assurer une stabilité de gain automatique pour les deux circuits sur une large gamme de variations de température.

Dans ce but, un signal de sortie du circuit de mesure d'amplitude est utilisé à la fois pour les circuits de mesure de phase et d'amplitude pour compenser les variations de gain dues aux effets de la température dans les deux circuits. Bien que le circuit de mesure de phase ne fasse pas réellement partie d'un agencement de commande de gain par contre-réaction en boucle fermée, ses variations de gain sont néanmoins compensées de façon adéquate de manière à obtenir un fonctionnement correct de ce circuit pour obtenir la mesure de phase très précise souhaitée. En outre, la boucle de commande de gain par contre-réaction est séparée de la partie de détection d'amplitude du circuit de mesure d'amplitude, ceci permet d'obtenir le temps de réponse faible nécessaire pour la commande de gain alors que le signal de sortie de la partie de détection d'amplitude possède une forme qui présente une très bonne linéarité et qui est utile pour la conversion analogique-numérique.

L'objet de la présente invention est un dispositif selon la revendication 1 et un procédé selon la revendication 4.

La présente invention sera mieux comprise à l'aide de la description suivante d'un mode de réalisation particulier donné à titre d'exemple et représenté aux dessins annexés sur lesquels:

la figure 1 est un schéma de blocs d'un système de diagraphie suivant l'invention; et

la figure 2 est un schéma de blocs détaillé des circuits de mesure de phase et d'amplitude faisant partie du système de la figure 1.

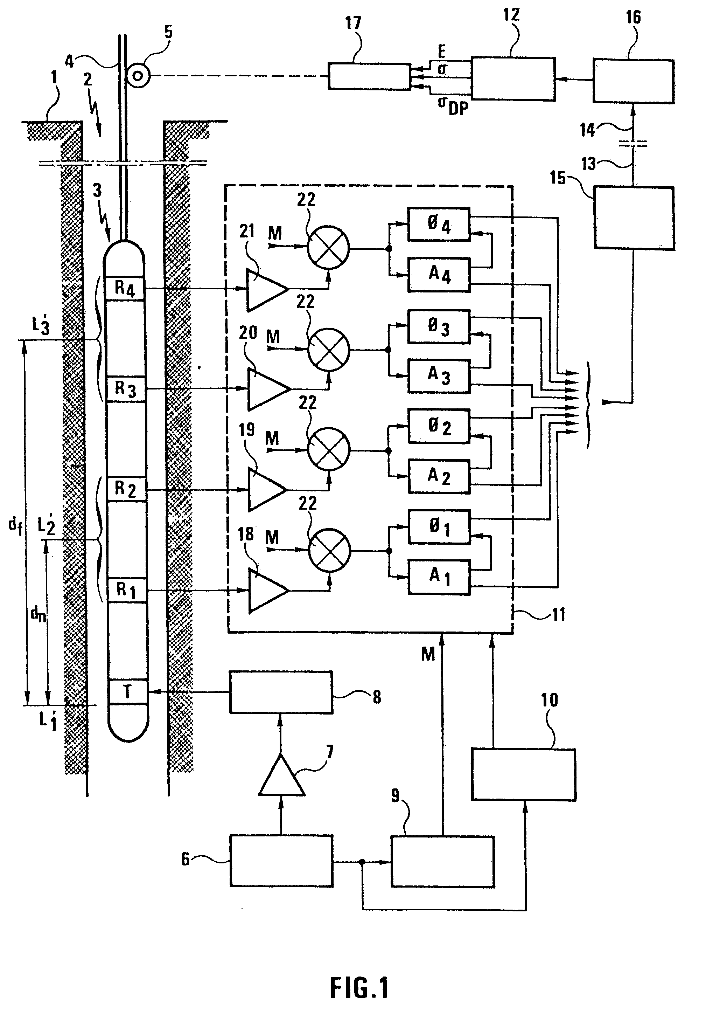

En se référant à la figure 1, on a représenté un mode de réalisation représentatif d'un système suivant l'invention pour étudier des formations souterraines 1 traversées par un sondage 2. Le sondage 2 peut être rempli d'air ou, de façon plus typique, de boue de forage qui peut être soit à base d'eau soit à base d'huile. De même, le sondage peut être non tubé ou tubé avec un matériau non conducteur. Le dispositif d'étude ou de diagraphie 3 est suspendu dans le sondage 2 sur un câble armé 4 dont la longueur détermine sensiblement la profondeur relative du dispositif 3. La longueur du câble est commandée par des moyens appropriés en surface, par exemple un mécanisme à tambour et à treuil (non représenté). Le câble armé 4 est rembobiné sur le tambour pour remonter le dispositif 3 vers la surface lors de la mesure de caractéristiques de la formation. Des mesures de profondeur sont effectuées par une roue mesureuse 5 qui tourne par suite du contact avec le câble 4. Les impulsions fournies par la rotation de la roue mesureuse 5 sont appliquées à un enregistreur pour obtenir un enregistrement des profondeurs auxquelles ont été effectuées les mesures.

Le dispositif de diagraphie 3 peut être une sonde qui contient un émetteur T, une première paire ou paire proche de récepteurs R1, R2, et une seconde paire ou paire éloignée de récepteurs R3, R4. L'émetteur T et les récepteurs R1, R2, R3 et R4 sont de préférence, mais pas obligatoirement, constitués par des bobines. L'émetteur est situé ici dans le sondage en un premier endroit L1', la paire de récepteurs proche est située en un second endroit L2' et la paire de récepteurs éloignée est située en un troisième endroit L3'. Les second et troisième endroits sont en réalité des régions dans lesquelles se trouvent les paires de récepteurs respectives et, pour la commodité, L2' est défini comme ayant une position ou un niveau de profondeur de référence à mi-chemin entre R1 et R2, tandis que L3' est défini comme ayant une position ou un niveau de profondeur à mi-chemin entre R3 et R4. L'espacement relatif de la paire de récepteurs sera traité ci-dessous, mais de préférence l'espacement Dn entre l'émetteur T et la paire de récepteurs R1, R2 est de l'ordre de la moitié de l'espacement Df entre l'émetteur T et la paire de récepteurs R3, R4.

L'émetteur T est commandé par un circuit qui comprend un oscillateur 6, qui peut être du type commandé par cristal qui fournit un signal radiofréquence dans la gamme de 10 à 100 MHz, de préférence environ 25 MHz. Le signal de sortie de l'oscillateur 6 est amplifié par l'amplificateur 7 puis appliqué à l'émetteur T par l'intermédiaire d'un circuit d'équilibrage et d'adaptation 8. Un oscillateur 9, qui est synchronisé avec l'oscillateur 6, fournit un signal de sortie possédant une fréquence qui diffère de la fréquence des signaux fournis par l'oscillateur 6 d'une valeur relativement faible, par exemple 10 KHz. Comme on le verra, le signal de sortie de l'oscillateur 9 est mélangé avec les signaux provenant des récepteurs pour fournir un autre signal dont la phase et l'amplitude sont liées à la phase et à l'amplitude des signaux de sortie des récepteurs mais dont la fréquence est beaucoup plus faible (10 KHz) qui simplifie les opérations de détection d'amplitude et de phase. Un autre oscillateur 10, qui est synchronisé avec l'oscillateur 6, fournit un signal de sortie de référence possédant une fréquence qui correspond à la fréquence plus faible mentionnée ci-dessus, c'est-à-dire 110 KHz.

Un circuit 11 mesure l'amplitude et la phase de l'onde d'énergie électromagnétique reçue au niveau des récepteurs R1—R4.

Pour faciliter la représentation, le circuit de l'émetteur et des récepteurs décrit a été représenté séparé du dispositif 3, bien que ce circuit soit généralement situé dans le dispositif de diagraphie. Le circuit est relié électriquement à des instruments situés en surface, comprenant un module de calcul 12, par l'intermédiaire de conducteurs 13 et 14 qui se trouvent dans le câble armé 4. Un système de communication entre l'outil de diagraphie 3 et la surface peut comprendre des circuits d'interface 15 et 16 faisant partie d'un système de communication par câble. Un tel système est décrit dans FR-A-2 379 694 cité à titre de référence.

Le module de calcul 12 combine les signaux reçus et en dérive une mesure d'un signal d'atténuation relative fourni par exemple par R1, R2, et d'un signal de déphasage fourni par exemple par R3, R4 pour obtenir des valeurs de la constante diélectrique et de la conductivité pour la formation à une profondeur d'étude particulière dans la formation environnante. Les valeurs calculées pour la constante diélectrique et la conductivité peuvent être appliquées à un enregistreur 17 qui reçoit également des signaux représentatifs de la profondeur provenant de la roue mesureuse 5. L'enregistreur 17 fournit un diagramme des valeurs de la constante diélectrique et de la conductivité pour les formations entourant le sondage, en fonction de la profondeur. On comprendra que le module de calcul et/ou les dispositifs d'enregistrement ou de mémorisation peuvent être situés à un endroit éloigné.

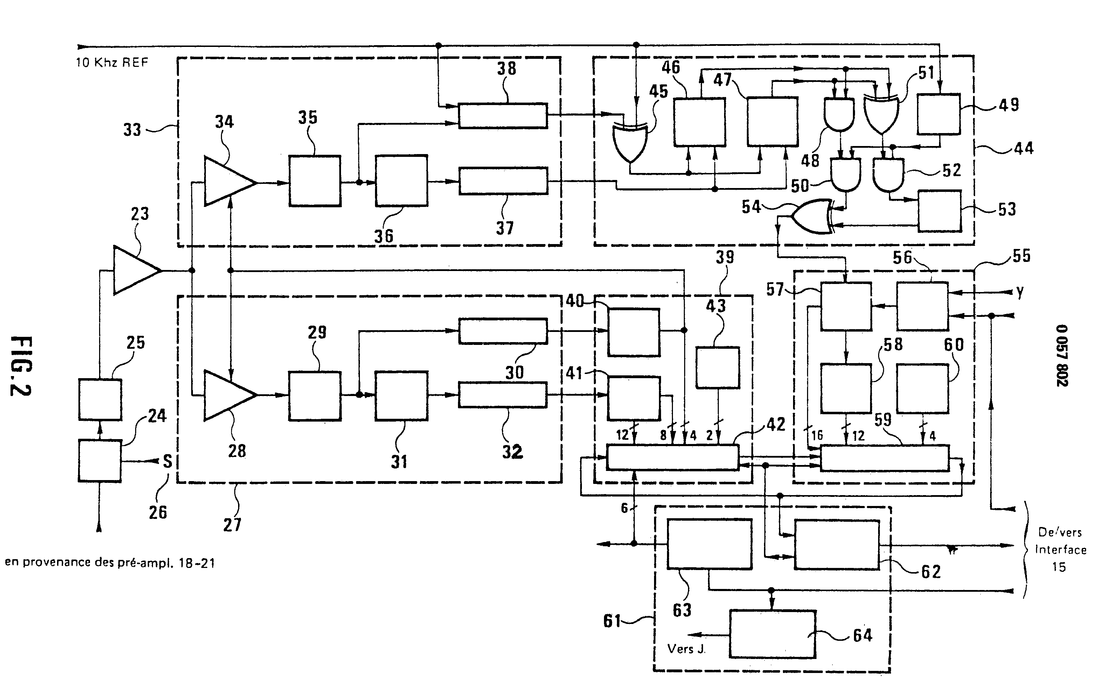

La figure 1 représente également un mode de réalisation du circuit 11. Les signaux provenant des récepteurs R1—R4 sont appliqués aux pré-amplificateurs 18—21. Pour simplifier le processus de détection d'amplitude, les signaux de sortie des pré-amplificateurs 18—21 sont respectivement appliqués à des circuits mélangeurs 22, qui reçoivent sur leur seconde entrée le signal provenant de l'oscillateur 9 dont la fréquence diffère de 10 KHz, c'est-à-dire est supérieure ou inférieure de 10 KHz, de la fréquence de l'émetteur. Le mélange des deux signaux fournit, dans chaque cas, un signal de sortie dont l'amplitude et la phase sont liées à l'amplitude et à la phase du signal détecté au niveau du récepteur mais qui possède une fréquence de 10 KHz. Les signaux de sortie des mélangeurs 22—25 sont ensuite appliqués à des voies de détection distinctes de phase $\Phi1 - \Phi4$ et d'amplitude A1—A4 qui seront décrites plus en détail ci-après en se référant à la figure 2. On remarquera naturellement qu'il n'est pas nécessaire de prévoir des voies distinctes pour la détection de phase et d'amplitude pour chaque récepteur. Au contraire, il est fortement souhaitable de n'avoir qu'une voie de détection et de mesure de phase pour les quatre récepteurs, les mesures distinctes étant effectuées avec multiplexage dans le temps. De cette manière, on n'a pas à se soucier des différences dues à l'existence de composants différents dans des voies différentes. De plus, étant donné que la mesure finale est une mesure relative entre les signaux de sortie de récepteurs différents, bien qu'il nécessite un degré de précision important, l'agencement de mesure multiplexé est très souhaitable. De même, il suffit de prévoir une seule voie de mesure d'amplitude couplée à des moyens pour obtenir une utilisation multiplexée de cette voie pour les signaux de sortie des différents récepteurs. De cette manière et comme ce qui a été dit pour les mesures de phase, la précision des mesures est augmentée.

La figure 2 représente un mode de réalisation des voies de mesure d'amplitude et de phase faisant partie du circuit 11 de la figure 1. Sur la figure 2, un amplificateur 23 dont le bruit est faible possède un gain commun pour les quatre signaux multiplexés provenant du circuit mélangeur 25, le multiplexage dans le temps des signaux étant effectué de façon bien connue au moyen de circuits de multiplexage dans le temps 24 et d'une impulsions d'horloge appliquée sur une borne 26. Le signal de sortie de l'amplificateur 23 est ensuite appliqué à un circuit 27 qui fonctionne comme un amplificateur programmable suivi de deux détecteurs d'amplitude. La stabilité de son gain sur une large gamme de températures permet de mesurer l'amplitude avec une précision supérieure à 0,1 dB.

Une chaîne d'amplificateurs 28 est réalisée à l'aide d'amplificateurs opérationnels donnant un gain programmable de 0 à 75 dB avec une excellente stabilité en température. Les cellules de gain allant de 20 dB à 10 dB peuvent être réaliés en utilisant deux amplificateurs opérationnels fournissant un gain important dans un agencement en boucle ouverte et une bonne stabilité du gain dans un agencement en boucle fermée. On peut réaliser une cellule de gain de 40 dB en utilisant deux cellules de gain de 20 dB en série qui peuvent être combinées dans des agencements en boucle ouverte ou fermée pour commander le gain et la stabilité, comme décrit précédemment.

Des commutateurs analogiques (non représentés) qui permettent d'obtenir les différents agencements des amplificateurs opérationnels sont munis de circuits de contre-réaction comprenant des suiveurs de tension respectifs pour éviter toute diaphonie entre eux. Un premier détecteur d'amplitude comporte un filtre passe-bande 29 et un redresseur double alternance 30 de manière à fournir un signal auxiliaire qui, bien que pas très précis, est néanmoins utilisable pour la commande de gain, avec l'avantage qu'on obtient facilement le temps de réponse relativement court nécessaire pour une commande précise du gain. Un second filtre passe-bande 31 applique le signal de sortie du filtre passe-bande 29 à un détecteur d'amplitude 32 qui utilise une technique de »détection synchronisée par impulsions« avec une configuration homodyne utilisant un comparateur. Cette technique fournit un signal de sortie possédant une bonne linéarité et convenant pour une détection d'amplitude précise, tout en convenant également pour une conversion analogique-numérique.

Le signal de sortie du pré-amplificateur 23 est également appliqué à un circuit 33 qui le traite pour lui donner un niveau et une forme compatible avec le fonctionnement d'un détecteur de passage par zéro. En outre, ce circuit 33 délivre un signal de sortie indiquant si le signal est déphasé ou non par rapport à une phase de référence, pour améliorer encore la mesure de détection de phase, comme décrit ci-après.

En raison de l'exigence d'une bonne stabilité en phase, l'amplificateur 34 est réalisé avec des amplificateurs vidéo à grande vitesse qui sont couplés au moyen de circuits capacitifs et résistifs. Les pôles passe-bas et passe-haut des amplificateurs sont suffisamment éloignés de la fréquence intermédiaire pour maintenir la variation de phase en fonction du gain inférieure à 0,1" pour 30 dB. Des filtres passe-bande 35 et 36 sont choisis et agencés de manière à obtenir le facteur Q maximal possible pour 10 KHz, en tenant compre de la variation possible due aux composants avec la température et le produit gain x bande passante pouvant être obtenu avec les amplificateurs opérationnels utilisés. Le signal de sortie de ces filtres passe-bande est appliqué à un détecteur de passage par zéro 37, tandis qu'un signal auxiliaire, à savoir le signal de sortie du filtre passe-bande 35, est appliqué à un détecteur de mode 38. Ce signal auxiliaire, bien que pas très précis, est tout à fait satisfaisant pour la détection de mode et a l'avantage d'être fourni avec le temps de réponse exigé pour le fonctionnement du système.

En utilisant un comparateur à grande vitesse à »logique à couplage d'émetteur« en association avec un niveau de signal d'entrée élevé, la contribution à la variation de phase due à la dérive peut être maintenue au niveau d'une erreur de second ordre, la mesure de phase étant traitée par rapport aux flancs descendants et ascendants du signal. Dans ce but, le détecteur de mode 38 est utilisé de manière que l'ambiguïté au voisinage de zéro soit évitée en effectuant la détection lorsque le signal est en opposition de phase ou en phase par rapport à la phase de référence. En utilisant un comparateur à faible vitesse, le signal d'entrée analogique est converti dans un circuit à transistors MOS complémentaires pour fournir un niveau de signal qui est mélangé, dans un circuit OU exclusif, avec la phase de référence. Le signal de sortie de ce comparateur de phase possède un coefficient d'utilisation qui est fonction du déphasage. Ce signal de déphasage est ensuite filtré, par un filtre passe-bande de troisième ordre, fournissant un signal dont l'amplitude est proportionnelle au déphasage. Ensuite, un comparateur à hystérésis compare le niveau du signal au niveau moyen entre un »0« et un »1« logiques d'un circuit à logique MOS complémentaire donnant une fonction de transfert:

mode = 1 autour de $\pi$ et mode = 0 autour de 0.

En revenant maintenant aux agencements de détection d'amplitude, le circuit 27 est suivi d'un circuit de commande automatique de gain 39 dans lequel l'amplitude détectée par le redresseur à double alternance actif 30 est filtrée par un filtre passe-bande et est ensuite appliquée à un détecteur à fenêtre 40 qui détecte lorsque le signal de sortie est trop élevé ou trop faible. La fenêtre est avantageusement choisie de manière que le signal soit maintenu éloigné du niveau de saturation qui est un niveau qu'on sait être peu précis. Ensuite un compteur réversible, qui fait partie du détecteur 40, augmente ou diminue le gain de l'amplificateur 28 de façon à maintenir le niveau de signal dans une gamme de 5 dB. Le signal de sortie de ce compteur, qui représente le gain, est envoyé à l'interface avec deux autres signaux signifiant »trop faible« et »trop élevé« de façon à avertir les circuits de traitement situés en surface que la mesure de diagraphie se trouve hors de la gamme après la commande automatique de gain. Le compteur est agencé de manière à compter uniquement de zéro à quinze et il ne peut pas y avoir de dépassement de capacité inférieur ou supérieur, la fréquence de comptage est choisie égale à 2 KHz pour éviter des oscillations. En outre, suivant l'invention, le signal de sortie du détecteur 40 est appliqué à l'amplificateur 34 faisant partie du circuit 33, de façon à augmenter ou diminuer le gain de l'amplificateur 34 pour maintenir un niveau de signal stable convenant pour le fonctionnement du détecteur de passage par zéro. Bien que ce nouvel agencement ne représente pas un agencement de contre-réaction classique, il s'est révélé très avantageux pour commander les deux amplificateurs 28 et 34 au moyen de l'agencement de contre-réaction séparé pour l'amplificateur de phase 34 stable.

Un circuit de mesure d'amplitude 39 comprend un convertisseur hybride analogique-numérique 41 possédant une excellente linéarité sur la gamme de températures opérationnelles et étant donné que l'outil de diagraphie permet une faible variation du gain, il suffit de corriger la dérive du signal de sortie du convertisseur, ladite dérive étant appliquée à des bascules 42, constituant un convertisseur parallèle-série, avec l'amplitude mesurée. On remarquera que la cadence des circuits d'acquisition de gain et d'amplitude n'est pas du tout synchronisée avec le régime de cadence donné de l'outil de diagraphie ni avec la cadence des circuits des circuits d'acquisition de phase, étant donné qu'elle est auto-synchronisée avec le registre d'approximation successif du convertisseur analogique-numérique. Un circuit d'indication d'état 43 applique aux bascules 42 des informations concernant la gamme de mesure de diagraphie.

En revenant maintenant aux circuits de mesure de phase, suivant le circuit 33, un circuit convertisseur phase-durée d'impulsion 44, comprenant une porte OU exclusif 45 et un circuit convertissant le signal de phase en une durée d'impulsion, a pour but de convertir la différence de phase entre le signal fourni par le détecteur de passage par zéro 37 et un signal de référence à 10 KHz en impulsions de durée variable représentant la différence de phase sur les flancs ascendants et descendants, et de fournir en outre un facteur de pré-démultiplication pour permettre d'obtenir le taux de comptage des circuits à logique MOS complémentaires. Dans ce but, la porte $\overline{OU}$ exclusif 45, dont une des bornes d'entrée reçoit le signal de référence à 10 KHz, sert à décaler la mesure de phase de $\pi$.

Le circuit convertisseur phase-durée d'impulsions est construit autour d'un détecteur 46 des flancs ascendants et d'un détecteur 47 des flancs descendants. Du fait des techniques utilisées, le circuit est synchronisé sur les flancs descendants et peut être considéré comme deux diviseurs par deux en montage croisé et, habituellement, le coefficient d'utilisation de sortie 46, 47 est égal à la différence de phase entre le signal du détecteur de passage par zéro et le signal de référence à 10 KHz. Ces signaux de sortie sont appliqués à une porte ET 48 dont le signal de sortie est appliqué, en même temps qu'une fréquence de comptage de référence (fc) fournie par une horloge 49, à une autre porte ET 50. Cependant, lorsque le déphasage entre les signaux de sortie des détecteurs 46, 47 est supérieur à $\pi$, les deux signaux de sortie fournis par les détecteurs 46, 47 peuvent se chevaucher et par conséquent il est nécessaire d'effectuer un comtage avec une fréquence 2fc. Etant donné que fc est choisi initialement pour être aussi élevée que possible (par exemple 81, 92 MHz), les circuits ne sont pas capables de compter à une fréquence 2fc. Le déphasage à la seconde fréquence de comptage (2fc) est obtenu par conséquent en appliquant les signaux de sortie des détecteurs 46, 47 aux bornes d'entrée respectives d'une porte OU exclusif 51 dont le signal de sortie est appliqué, avec la fréquence de comptage de référence (fc), aux bornes respectives d'une porte ET 52. Le signal de sortie de la porte 52 est divisé par deux dans le circuit 53 et est appliqué, de même que le signal de sortie de la porte 50, à une porte OU exclusif 54. Cependant on remarquera que l'effet du circuit diviseur 53 n'est pas le même que celui obtenu en divisant par deux la fréquence de comptage du fait que le compteur est remis à zéro aprés chaque mesure, donnant une résolution de temps égale à 1/fc. La porte 54 délivre alors un signal pulsé dont le nombre d'impulsions est proportionnel au déphasage entre le signal mesuré et le signal de référence à 10 KHz.

Le circuit 55 commande la cadence des circuits électroniques de mesure de phase et d'amplitude et compte les impulsions provenant du circuit détecteur de phase 44. La logique de fonctionnement du circuit 55 est la suivante. Un cycle de mesure est initialisé par un signal de changement de récepteur provenant de l'interface 15. Une première bascule monostable maintient les circuits électroniques de mesure dans un état d'attente correspondant aux rebondissements des relais, une seconde bascule monostable démarre et autorise l'acquisition de la commande automatique de gain, tandis qu'une troisième bascule monostable attend pendant une période de temps plus importante que la constante de temps des filtres passe-bande. Ensuite, un cycle de mesure d'amplitude et de phase peut démarrer et un circuit logique de commande 56 délivre une impulsion toutes les dix périodes de fréquence intermédaire, synchronisant la mesure avec la phase réelle du signal. Comme décrit ci-dessus, le circuit convertisseur phase-durée d'impulsion 44 délivre un signal pulsé dont le nombre d'impulsions est proportionnel au déphasage entre le signal mesuré et la fréquence de 10 KHz, de sorte que le déphasage est en fait égal au nombre d'impulsions divisé par le nombre de périodes de mesure. Par conséquent, les circuits électroniques de mesure de phase accumulent le nombre d'impulsions par l'intermédiaire d'un premier compteur 57, et le nombre de périodes de mesure, par l'intermédiaire d'un second compteur 58, fournissant un facteur d'intégration pour définir complètement la mesure de phase indépendamment du régime de cadence de mesure utilisé par l'outil de diagraphie. Les signaux de sortie des compteurs 57, 58 sont appliqués à des bascules 59 constituant un convertisseur parallèle-série. Un circuit d'indication d'état 60 applique aux bascules 59 des informations concernant l'état interne des circuits électroniques de commande et de l'horloge 49.

Les bascules 42, 59 sont couplées à un circuit de commande 61 comprenant un circuit 62 qui commande le fonctionnement des bascules 42, 59 et applique leurs signaux de sortie respectifs aux circuits d'interface. Un circuit de bascules de commande 63 est couplé aux circuits d'interface et commande le fonctionnement des circuits multiplexeurs 24, tandis qu'un décodeur 64 de changement de récepteur signale simultanément au circuit logique de commande 56 la commutation entre récepteurs.

## Revendications

1. Dispositif pour déterminer la constante diélectrique et/ou la conductivité de formations terrestres entourant un sondage, comportant en combinaison, un émetteur (T) pour envoyer une onde d'énergie électromagnétique dans le sondage, l'émetteur (T) se trouvant sur un organe de support (3) déplaçable dans le sondage; des récepteurs ($R_1$, $R_2$, $R_3$, $R_4$) montés sur ledit organe de support (3) et situés l'un derrière l'autre par rapport à l'émetteur, des première (27, 39) et deuxième (33, 44, 55) voies de traitement, susceptibles d'être couplées de façon commutable à chacun desdits récepteurs ($R_1$, $R_2$, $R_3$, $R_4$);
ladite première voie de traitement (27, 39) comprenant des moyens de mesure d'amplitude (28, 29, 31, 32) pour fournir une mesure de l'amplitude de l'onde d'énergie électromagnétique au niveau de celui desdits récepteurs auquel sont couplées lesdites première et deuxième voies, et,
ladite deuxième voie de traitement (33, 44, 55) comprenant des moyens de mesure de phase (33, 44) pour fournir une mesure de la phase de l'onde d'énergie électromagnétique au niveau de celui desdits récepteurs auquel sont couplées lesdites première et deuxième voies, par rapport à une référence liée à la phase de l'onde dudit émetteur (T), ledit dispositif comportant aussi des moyens (12) de calcul pour déterminer la constante diélectrique et/ou la conductivité des formations terrestres à partir desdites mesures d'amplitude et de phase aux differents récepteurs ($R_1$, $R_2$, $R_3$, $R_4$), caractérisé en ce que:
lesdits moyens de mesure d'amplitude incluent un premier amplificateur (28), et lesdits moyens de mesure de phase incluent un deuxième amplificateur (34), ledit premier amplificateur (28) étant choisi de manière à posséder une stabilité de gain élevée en température par rapport à la stabilité de gain en température du deuxième amplificateur (34) et le deuxième amplificateur (34) étant choisi de manière à posséder une stabilité de phase élevée en température par rapport à la stabilité de phase en température du premier amplificateur (28).

2. Dispositif suivant la revendication 1, caractérisé en ce que la première voie de traitement (27, 29) comprend en outre des moyens de commande de gain (30, 40), pour fournir un signal de sortie appliqué, par un agencement de contre-réaction en boucle fermée, à une entrée dudit premier amplificateur (28); et des moyens pour appliquer le signal de sortie desdits moyens de commande de gain (30, 40) à une entrée dudit deuxième amplificateur (34).

3. Dispositif suivant l'une des revendications 1 ou 2, caractérisé en ce que ladite deuxième voie de traitement (33, 44, 55) comprend des moyens (55) pour répéter, pendant un certain nombre de périodes de mesure, ladite mesure de phase de l'onde d'énergie électromagnétique reçue au niveau de celui desdits récepteurs auquel sont couplées lesdites voies par rapport à ladite référence en totalisant lesdites mesures répétées et pour effectuer une mesure du nombre desdites périodes de mesure pendant lesquelles lesdites mesures de phase sont totalisées.

4. Procédé pour déterminer la constante diélectrique et/ou la conductivité de formations terrestres entourant un sondage qui consiste:

— à émettre dans le sondage une onde d'énergie électromagnétique;
— à recevoir l'onde d'énergie électromagnétique au moyen de récepteurs ($R_1$, $R_2$, $R_3$, $R_4$) situés à des emplacements se trouvant l'un derrière l'autre par rapport à l'endroit d'émission dans le sondage, lesdits récepteurs fournissant des signaux;
— à traiter lesdits signaux par l'intermédiaire d'une première (27, 39) et d'une deuxième (33, 44, 55) voie de traitement susceptibles d'être couplées de façon commutable à chacun desdits récepteurs ($R_1$, $R_2$, $R_3$, $R_4$);
— à effectuer par des moyens de mesure d'amplitude (28, 29, 31, 32) faisant partie de ladite première voie (27, 39), une mesure de l'amplitude de l'onde d'énergie électromagnétique reçue au niveau de celui desdits récepteurs auquel sont couplées lesdites première et deuxième voies;
— à effectuer par des moyens de mesure de phase (33, 44) faisant partie de ladite deuxième voie (33, 44, 55), une mesure de la phase de l'onde d'énergie électromagnétique reçue au niveau de celui desdits récepteurs auquel sont couplées lesdites voies, par rapport à une référence liée à la phase de l'onde dudit émetteur;
— à déterminer par des moyens (12) de calcul la constante diélectrique et/ou la conductivité des formations terrestres à partir desdites mesures d'amplitude et de phase aux différent récepteurs;

caractérisé en ce qu'on inclut dans les moyens de mesure d'amplitude un premier amplificateur (28) et dans les moyens de mesure de phase un deuxième amplificateur (34) et en ce que ledit premier amplificateur (28) est choisi de manière à posséder une stabilité de gain élevée en température par rapport à la stabilité de gain en température du deuxième amplificateur (34); et ledit deuxième amplificateur (34) est choisi de manière à posséder une stabilité de phase élevée en température par rapport à la stabilité de phase en température du premier amplificateur (28).

5. Procédé suivant la revendication 4, caractérisé en ce que,
par des moyens de commande de gain (30, 40) faisant partie de ladite première voie (27, 39), on forme un signal de sortie des moyens de commande de gain appliqué, par un agencement de contre-réaction en boucle fermée, à une entrée dudit premier amplificateur (28); et
on applique ledit signal de sortie des moyens de commande de gain à une entrée dudit deuxième amplificateur (34).

6. Procédé suivant l'une des revendications 4 ou 5, caractérisé en ce qu'il comprend de plus l'étape consistant à répéter pendant un certain nombre de périodes de mesure, ladite mesure de phase de l'onde d'énergie électromagnétique reçue au niveau de celui desdits récepteurs auquel sont couplées lesdites voies par rapport à ladite référence, lesdites mesures de phase répétées étant totalisées; et à mesurer le nombre de périodes de mesure pendant lesquelles lesdites mesures de phase répétées sont totalisées.

**Patentansprüche**

1. Anordnung zum Bestimmen der Dielektrizitätskonstante und/oder der Leitfähigkeit von einer Bohrung umgebenden Erdformationen, umfassend in Kombination einen Sender (T) zum Aussenden einer Welle elektromagnetischer Energie in die Bohrung, wobei der Sender (T) sich auf einem Abstützorgan (3) befindet, das in der Bohrung verlagerbar ist, Empfänger ($R_1$, $R_2$, $R_3$, $R_4$), montiert auf dem genannten Abstützorgan (3) und hintereinander plaziert relativ zum Sender, erste (27, 39) und zweite (33, 44, 55) Verarbeitungswege, die umschaltbar an jeder der genannten Empfänger ($R_1$, $R_2$, $R_3$, $R_4$) ankoppelbar sind,
wobei der erste Verarbeitungsweg (27, 39) Mittel zum Messen der Amplitude (28, 29, 31, 32) umfaßt zum Liefern einer Amplitudenmessung der Welle elektromagnetischer Energie auf dem Niveau desjenigen der Empfänger, an den der genannte und zweite Weg angekoppelt sind, und
wobei der zweite Verarbeitungsweg (33, 44, 55) Mittel zum Messen der Phase (33, 44) umfaßt zum Liefern einer Phasenmessung der Welle elektromagnetischer Energie auf dem Niveau desjenigen der Empfänger, an den der erste und zweite Weg angekoppelt sind, relativ zu einer Referenz, die in Beziehung steht mit der Phase der Welle des Senders (T), welche Anordnung ferner Berechnungsmittel (12) umfaßt zum Bestimmen der Dielektrizitätskonstante und/oder der Leitfähigkeit der Erdformationen, ausgehend von den genannten Amplituden- und Phasenmessungen an den verschiedenen Empfängern ($R_1$, $R_2$, $R_3$, $R_4$), dadurch gekennzeichnet, daß die Amplitudenmeßmittel einen ersten Verstärker (28) umfassen und die genannten Phasenmeßmittel einen zweiten Verstärker (34) umfassen, welcher erste Verstärker (28) derart gewählt ist, daß er eine erhöhte Temperaturstabilität des Verstärkerungsgrades aufweist relativ zur Temperaturstabilität des Verstärkungsgrades des zweiten Verstärkers (34), und daß der zweite Verstärker (34) derart gewählt ist, daß er eine erhöhte Temperaturstabilität der Phase aufweist relativ zu der Temperaturstabilität der Phase des ersten Verstärkers (28).

2. Anordnung nach Anspruch 1, dadurch gekennzeichnet, daß der erste Verarbeitungsweg (27, 39) ferner Verstärkungssteuermittel (30, 40) umfaßt zum Liefern eines Ausgangssignals, welches über eine Gegenkopplungsregelung in geschlossener Schleife an einen Eingang des ersten Verstärkers (28) angelegt ist sowie Mittel aufweist zum Anlegen des Ausgangssignals der genannten Verstärkungssteuermittel (30, 40) an einen Eingang des zweiten Verstärkers (34).

3. Anordnung nach Anspruch 1 oder 2, dadurch gekennzeichnet, daß der zweite Verarbeitungsschaltkreis (33, 44, 55) Mittel (55) umfaßt zum Wiederholen, während einer bestimmten Anzahl von Meßperioden, der empfangenen Welle elektromagnetischer Energie auf dem Niveau derjenigen Empfänger, an denen die genannten Wege angekoppelt sind relativ zu der genannten Referenz unter Summenbildung der genannten wiederholten Messungen und zum Bewirken einer Messung der Anzahl der genannten Meßperioden, während welchen die genannten Phasenmessungen summiert werden.

4. Verfahren zum Bestimmen der Dielektrizitätskonstante und/oder der Leitfähigkeit von eine Bohrung umgebenden Erdformationen, bestehend aus:

— Aussender einer Welle elektromagnetischer Energie in die Bohrung,
— Empfänger der Welle elektromagnetischer Energie mittels Empfängern ($R_1$, $R_2$, $R_3$, $R_4$), die sich an Stellen befinden, welche hintereinander liegen relativ zu der Aussendestelle in die Bohrung, welche Empfänger Signale liefern,
— Verarbeiten der Signale mittels eines ersten (27, 39) und eines zweiten (33, 44, 55) Verarbeitungsweges, welche umschaltbar ankoppelbar sind an jeden der genannten Empfänger ($R_1$, $R_2$, $R_3$, $R_4$),
— Ausführen mittels Amplitudenmitteln (28, 29, 31, 32), die einen Teil eines ersten Weges (27, 39) bilden, einer Messung der Amplitude der empfangenen Welle elektromagnetischer Energie auf dem Niveau desjeniger der Empfänger, an den die genannten ersten und zweiten Wege angekoppelt sind,
— Bewirken, mittels Phasenmeßmitteln (33, 44), die einen Teil des zweiten Verarbeitungsweges (33, 44, 45) bilden, einer Phasenmessung der empfangenen Welle elektromagnetischer Energie auf dem Niveau desjenigen der Empfänger, an den die genannten Wege angekoppelt sind, relativ zu einer Referenz, die in Beziehung steht mit der Phase der Welle des Senders,
— Bestimmen, mittels Berechnungsmitteln (12), der Dielektrizitätskonstante und/oder der Leitfähigkeit der Erdformationen, ausgehend von den genannten Amplituden- und Phasenmessungen der verschiedenen Empfänger,

dadurch gekennzeichnet, daß man in die Amplitudenmeßmittel einen ersten Verstärker (28) einbezieht und in die Phasenmeßmittel einen zweiten Verstärker (34) einbezieht und daß der erste Verstärker (28) derart gewählt wird, daß er eine erhöhte Temperaturstabilität des Verstärkungsgrades relativ zur Temperaturstabilität des Verstärkungsgrades des zweiten Verstärkers (34) aufweist und der zweite Verstärker (34) derart wird, daß er eine erhöhte Temperaturstabilität der Phase aufweist relativ zur Temperaturstabilität der Phase des ersten Verstärkers (28).

5. Verfahren nach Anspruch 4, dadurch gekennzeichnet, daß man mittels Verstärkungssteuermitteln (30, 40), die einen Teil des ersten Weges (27, 39) bilden, ein Ausgangssignal der Verstärkungsteuermittel erzeugt, das über eine Gegenkopplungsregelschleife an einen Eingang des ersten Verstärkers (28) angelegt wird und daß man das genannte Ausgangssignal der Verstärkungssteuermittel an einen Eingang des zweiten Verstärkers (34) angelegt.

6. Verfahren nach einem der Ansprüche 4 oder 5, dadurch gekennzeichnet, daß es darüber hinaus den Schritt umfaßt, während einer bestimmten Anzahl von Perioden der Messung die Phasenmessung der empfangenen Welle elektromagnetischer Energie auf dem Niveau desjenigen der Empfänger, an den die Wege angekoppelt sind, relativ zu der genannten Referenz zu wiederholen, wobei die wiederholten Phasenmessungen aufsummiert werden, um die Anzahl der Meßperioden zu messen, während welchen die genannten wiederholten Phasenmessungen summiert werden.

**Claims**

1. Apparatus for determining the dielectric constant and/or the conductivity of earth formations surrounding a borehole, the apparatus comprising in combination: a transmitter (T) for transmitting a wave of electromagnetic energy in the borehole, the transmitter (T) being placed on a support member (3) which is movable in the borehole; receivers (R₁, R₂, R₃, R₄) mounted on the said support member (3) and situated one behind the other relative to the transmitter; and first (27, 39) and second (33, 44, 55) processing channels suitable for being switchably coupled to each of the said receivers (R₁, R₂, R₃, R₄);

the said first processing channell (27, 39) including amplitude measuring means (28, 29, 31, 32) for supplying a measure of the amplitude of the wave of electromagnetic energy at that one of the said receivers to which the said first and second channels are coupled;

the said second processing channel (33, 44, 55) including phase measuring means (33, 44) for supplying a measure of the phase of the wave of electromagnetic energy at that one of the said receivers to which the said first and second channels are coupled relative to a reference related to the phase of the wave of the said transmitter (T), the said apparatus further comprising calculating means (12) for the determining the dielectric constant and/or the conductivity of the earth formations on the basis of the said measures of amplitude and phase at the various receivers (R₁, R₂, R₃, R₄), and being characterized in that:

the said amplitude measuring means include a first amplifier (28), and the said phase measuring means include a second amplifier (34), the said first amplifier (28) being chosen in such a manner as to possess high gain stability over temperature relative to the gain stability over temperature of the second amplifier (34), and the second amplifier (34) being chosen to possess high phase stability over temperature relative to the phase stability over temperature of the first amplifier (28).

2. Apparatus according to claim 1, characterized in that the first processing channel (27, 39) further includes gain control means (30, 40) for supplying an output signal which is applied via a closed loop negative feedback arrangement to one input of the said first amplifier (28); and means for applying the output signal from the said gain control means (30, 40) to one input of the said second amplifier (34).

3. Apparatus according to claim 1 or 2, characterized in that the said second processing channel (33, 44, 55) includes means (55) for repeating, during a plurality of measuring periods, the said phase measurement of the electromagnetic wave received at that one of the said receivers to which the said channels are coupled and relative to the said reference, for totalizing the said repeated measurements and for measuring the number of the said measuring periods during which the said phase measurements are totalized.

4. A method of determining the dielectric constant and/or the conductivity of earth formations surrounding a borehole, the method consisting in:

— transmitting a wave of electromagnetic energy in the borehole;
— receiving the wave of electromagnetic energy by means of receivers (R₁, R₂, R₃, R₄) situated at emplacements which are one behind the other relative to the positions of transmission in the borehole, the said receivers supplying signals;
— processing the said signals by means of a first (27, 39) and a second (33, 44, 55) processing channel suitable for being switchably coupled to each of the said receivers (R₁, R₂, R₃, R₄);
— using amplitude measuring means (28, 29, 31, 32) forming a part of the said first channel (27, 39) to measure the amplitude of the wave of electromagnetic energy received by that one of the said receivers to which the said first and second channels are coupled;
— using phase measuring means (33, 44) forming a part of the said second channel (33, 44, 55) to measure the phase of the wave of electromagnetic energy received by that one of the said receivers to which the said first and second channels are coupled and relative to a reference related to the phase of the wave from the said transmitter; and
— using calculating means (12) to determine the dielectric constant and/or the conductivity of the earth formations on the basis of the said amplitude and phase measurements at the various receivers;

characterized in that a first amplifier (28) is included in the amplitude measuring means and a second amplifier (34) is included in the phase measuring means and in that the said first amplifier (28) is chosen in such a manner as to possess high gain stability over temperature relative to the gain stability over temperature of the second amplifier (34), and the second amplifier (34) is chosen to possess high phase stability over temperature relative to the phase stability over temperature of the first amplifier (28).

5. A method according to claim 4, characterized in that,

an output signal is formed by gain control means (30, 40) forming a part of the first channel (27, 39), the output signal being applied via a closed loop negative feedback arrangement to one input of the first amplifier (28); and

the said output signal from the gain control means is applied to one input of the said second amplifier (34).

6. A method according to claim 4 or 5, characterized in that it further includes a step consisting in repeating, during a plurality of measuring periods, the said phase measurement of the electromagnetic wave received at that one of the said receivers to which the said channels are coupled and relative to the said reference, the said repeated measurements being totalized; and the number of measuring periods during which the said phase measurements are totalized being measured.

**FIG.1**

FIG.2